(19) Europäisches Patentamt
European Patent Office
Office européen des brevets

(11) **EP 4 648 145 A1**

(12) **EUROPEAN PATENT APPLICATION**

(43) Date of publication:
**12.11.2025 Bulletin 2025/46**

(21) Application number: **25150894.1**

(22) Date of filing: **09.01.2025**

(51) International Patent Classification (IPC):
*H01M 8/0258* (2016.01)    *H01M 8/026* (2016.01)
*H01M 8/0265* (2016.01)    *H01M 8/0267* (2016.01)
*H01M 8/04089* (2016.01)

(52) Cooperative Patent Classification (CPC):
**H01M 8/0258; H01M 8/026; H01M 8/0265;
H01M 8/0267; H01M 8/04089**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.05.2024 JP 2024076175**

(71) Applicants:
• **Kabushiki Kaisha Toshiba
Tokyo 105-0023 (JP)**

• **Toshiba Energy Systems & Solutions
Corporation
Saiwai-ku
Kawasaki-shi
Kanagawa (JP)**

(72) Inventor: **Takamata, Hikaru
Kawasaki-shi, Kanagawa (JP)**

(74) Representative: **Hoffmann Eitle
Patent- und Rechtsanwälte PartmbB
Arabellastraße 30
81925 München (DE)**

(54) **FLOW CHANNEL PLATE AND ELECTROCHEMICAL CELL**

(57)    A flow channel plate according to the present embodiment includes a flow channel for a reactant gas supplied to an electrochemical reactor. The flow channel includes a supply flow channel having a closed flow channel end on a downstream side and a discharge flow channel having a closed flow channel end on an upstream side. The supply flow channel and the discharge flow channel are arranged side-by-side in a direction substantially perpendicular to a direction in which the reactant gas flows. At least one of a cross sectional area on the downstream side of the supply flow channel being smaller than a cross sectional area on an upstream side of the supply flow channel or a cross sectional area on a downstream side of the discharge flow channel being greater than a cross sectional area on the upstream side of the discharge flow channel is satisfied.

FIG. 2

## Description

FIELD

The embodiments of the present invention relate to a flow channel plate and an electrochemical cell.

BACKGROUND

A fuel battery cell and an electrolytic cell are devices that can generate power using an electrochemical reaction or reversely, consume power to decompose water and carbon dioxide into hydrogen and carbon monoxide, respectively.

Electrochemical cells, including the fuel battery cell and the electrolytic cell, typically include as a constituent member a flow channel plate having a flow channel groove that allows a reactant gas and a cooling medium to be uniformly supplied across the entire reaction surface, for efficient progress of the electrochemical reaction. To avoid mixing of the reactant gas and the cooling medium, the flow channel plate is dense in most cases and those made of processed metal or carbon material are used.

As the flow channel structure of the flow channel plate, not only a simple linear flow channel but also many flow channel structures have been proposed for the purpose of reducing a diffusion overvoltage that is a loss in the electrochemical reaction, and one example of the flow channel structures is an interdigitated flow field (IDFF). The interdigitated flow field is a flow channel structure in which a supply flow channel with a closed downstream end and a discharge flow channel with a closed upstream end are alternately arranged. By forming the structure such that a supply gas all passes through a gas diffusion layer, a forced convection to the gas diffusion layer below a rib (separator) is generated. As a result, a partial pressure of the reactant gas in a vicinity of a three-phase boundary where the electrochemical reaction takes place can be increased so that advantageous effects of reduced diffusion overvoltage and uniform generated power distribution can be obtained.

In the interdigitated flow field, a static pressure difference between the supply flow channel and the discharge flow channel that have the rib in between creates a flow to the gas diffusion layer. The static pressure difference between the supply flow channel and the discharge flow channel is known to be reduced in a midstream portion of the flow channel as compared to an upstream portion and a downstream portion. Patent Literature 1 proposes a flow channel structure in which a flow channel resistance of gas passing through the gas diffusion layer on a lower side of a separator is reduced in a midstream portion of a flow channel as compared to an upstream portion and a downstream portion. In this manner, the flow to the gas diffusion layer in the midstream portion is promoted and uniform generated power distribution is expected.

Further, since the reactant gas is used for reaction, the concentration of the reactant gas is reduced toward the downstream side. Patent Literature 2 proposes a flow channel structure in which a flow channel resistance from an upstream end to a downstream end of a discharge flow channel increases as compared to the flow channel resistance from an upstream end to a downstream end of a supply flow channel for suppressing reduction in the gas diffusion performance in a region on the downstream side. In this manner, a differential pressure between the supply flow channel and the discharge flow channel that are adjacent to each other increases particularly in a portion on the downstream side of the gas to promote the flow to the gas diffusion layer on the downstream side, so that improvement in the power generation efficiency is expected.

BRIEF DESCRIPTION OF THE DRAWINGS

FIG. 1 is a cross sectional view showing an example of the configuration of an electrochemical cell according to a first embodiment;
FIG. 2 is a cross sectional view showing an example of the configuration of a flow channel plate according to the first embodiment;
FIG. 3 is a cross sectional view showing an example of the configuration of a flow channel plate according to a comparative example;
FIG. 4 is a cross sectional view showing an example of the configuration of a flow channel plate according to a first modification of the first embodiment;
FIG. 5 is a cross sectional view showing an example of the configuration of a flow channel plate according to a second modification of the first embodiment;
FIG. 6 is a cross sectional view showing an example of the configuration of a flow channel plate according to a second embodiment;
FIG. 7 is a cross sectional view showing an example of the configuration of a flow channel plate according to a first modification of the second embodiment;
FIG. 8 is a cross sectional view showing an example of the configuration of a flow channel plate according to a second modification of the second embodiment;
FIG. 9 is a cross sectional view showing an example of the configuration of a flow channel plate according to a third embodiment;
FIG. 10 is a graph showing an example of an inflow amount of a reactant gas according to the first embodiment to the third embodiment and the comparative example;
FIG. 11 is a bar chart showing an example of an overall pressure loss of the electrochemical cell according to the first embodiment to the third embodiment and the comparative example; and
FIG. 12 is a graph showing an example of performance of the electrochemical cell as a fuel battery cell according to the first embodiment to the third embodiment and the comparative example.

DETAILED DESCRIPTION

Embodiments will now be explained with reference to the accompanying drawings. The present invention is not limited to the embodiments. It should be noted that the drawings are schematic or conceptual, and the relationship between the thickness and the width in each element and the ratio among the dimensions of elements do not necessarily match the actual ones. Even if two or more drawings show the same portion, the dimensions and the ratio of the portion may differ in each drawing. In the present specification and the drawings, elements identical to those described in the foregoing drawings are denoted by like reference characters and detailed explanations thereof are omitted as appropriate.

A flow channel plate according to the present embodiment includes a flow channel for a reactant gas supplied to an electrochemical reactor. The flow channel includes a supply flow channel connected to a gas supply port and having a closed flow channel end on a downstream side and a discharge flow channel connected to a gas discharge port and having a closed flow channel end on an upstream side. The supply flow channel and the discharge flow channel are arranged side-by-side in a direction substantially perpendicular to a direction in which the reactant gas flows inside the supply flow channel and the discharge flow channel. At least one of a cross sectional area on the downstream side of the supply flow channel being smaller than a cross sectional area on an upstream side of the supply flow channel or a cross sectional area on a downstream side of the discharge flow channel being greater than a cross sectional area on the upstream side of the discharge flow channel is satisfied.

(First embodiment)

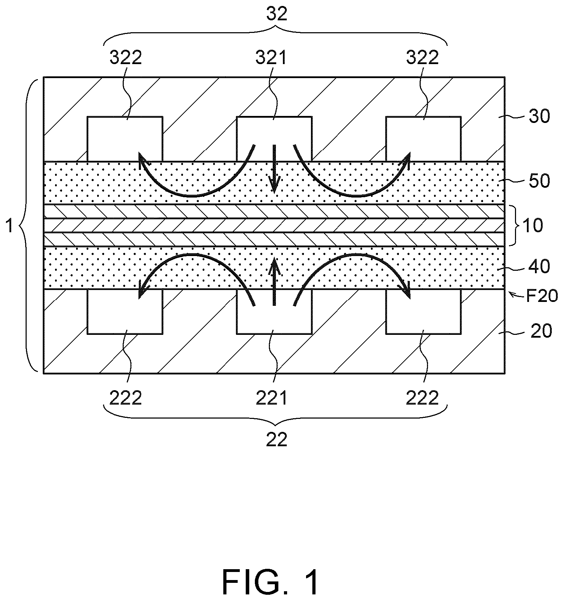

FIG. 1 is a cross sectional view showing an example of the configuration of an electrochemical cell 1 according to a first embodiment. The electrochemical cell 1 is a device using an electrochemical reaction and is, for example, a fuel battery cell that generates power or an electrolytic cell that consumes power and decomposes water and carbon dioxide into hydrogen and carbon monoxide, respectively. Note that FIG. 1 shows a portion of the electrochemical cell 1. An arrow shown in FIG. 1 indicates a flow of a reactant gas.

The electrochemical cell 1 includes a reactor 10, flow channel plates 20, 30, and gas diffusion layers 40, 50.

The reactor 10 (electrochemical reactor), for example, carries out reaction of the reactant gas in an anode and a cathode. For example, when the electrochemical cell 1 is a fuel battery cell, the reactor 10 includes an electrolyte membrane and a fuel electrode and an oxidant electrode sandwiching the electrolyte membrane.

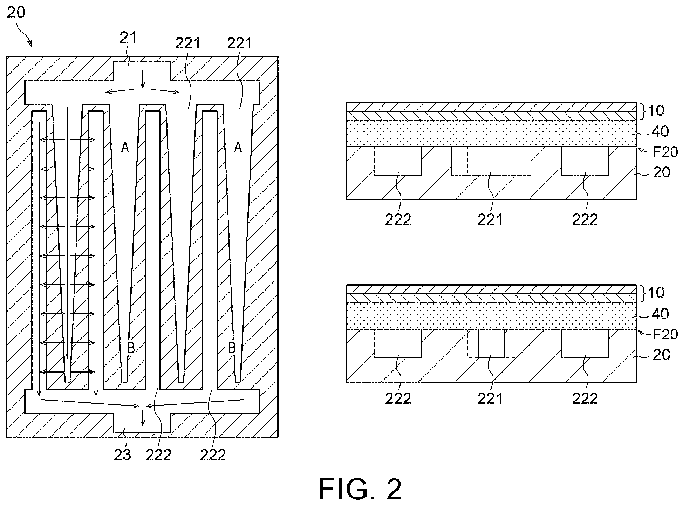

The flow channel plate 20 includes a flow channel 22 for a reactant gas in one of the anode and the cathode. The flow channel 22 is a flow channel for the reactant gas supplied to the reactor 10. Note that the details of the flow channel 22 will be described later with reference to FIG. 2.

The flow channel plate 30 includes a flow channel 32 for a reactant gas in the other of the anode and the cathode. The flow channel 32 is a flow channel for the reactant gas supplied to the reactor 10.

For the flow channel plates 20, 30, for example, a conductive and gas-impermeable member, such as a metal plate subjected to press-work or a dense carbon material subjected to machining or molding, may be used. For the flow channel plates 20, 30, a porous carbon material that obtains gas-impermeability by impregnating a gap with water may be used.

The gas diffusion layer 40 is disposed between the reactor 10 and the flow channel plate 20. The reactant gas can pass through the gas diffusion layer 40. The gas diffusion layer 40 includes, for example, a porous conductive layer. The gas diffusion layer 40 is, for example, carbon paper or carbon cloth.

The gas diffusion layer 50 is disposed between the reactor 10 and the flow channel plate 30. The reactant gas can pass through the gas diffusion layer 50. The material of the gas diffusion layer 50 is, for example, the same material as that of the gas diffusion layer 40.

The reactant gas flows through the inside of the flow channels 22, 32 in a direction perpendicular to the plane of the paper in FIG. 1. The reactant gas flowing through the flow channel 22 passes through the gas diffusion layer 40 and is consumed in the reactor 10 or flows through the adjacent flow channel 22. Likewise, the reactant gas flowing through the flow channel 32 passes through the gas diffusion layer 50 and is consumed in the reactor 10 or flows through the adjacent flow channel 32. Note that the flow channel 32 may be disposed such that the reactant gas flowing through the flow channel 32 flows in the left-right direction in the plane of the paper in FIG. 1, instead of the direction perpendicular to the plane of the paper in FIG. 1.

Note that a flow channel for a cooling medium such as cooling water is omitted.

FIG. 2 is a cross sectional view showing an example of the configuration of the flow channel plate 20 according to the first embodiment. On the left side of FIG. 2, a cross sectional view of the flow channel plate 20 as viewed from the reactor 10 is shown. In the upper right of FIG. 2, a cross sectional view corresponding to a cross-section along the line A-A on the left side of FIG. 2 is shown. In the lower right of FIG. 2, a cross sectional view corresponding to a cross-section along the line B-B on the left side of FIG. 2 is shown. Note that the arrows shown in FIG. 2 indicate the flow of the reactant gas.

Further, the flow channel plate 30 may have the same configuration as that of the flow channel plate 20.

The flow channel plate 20 includes a gas supply port 21, a flow channel 22, and a gas discharge port 23.

The gas supply port 21 is an inlet for the reactant gas to be supplied.

As described above, the flow channel 22 is a flow channel for the reactant gas to be supplied to the reactor 10. The flow channel 22 includes a plurality of supply flow channels 221 (supply branch flow channels) and a plurality of discharge flow channels 222 (discharge branch flow channels).

The supply flow channels 221 are connected to the gas supply port 21. A flow channel end on a downstream side of each supply flow channel 221 is closed. The supply flow channels 221 are provided in a groove shape from a surface F20 of the flow channel plate 20 opposing the reactor 10.

The discharge flow channels 222 are connected to the gas discharge port 23. A flow channel end on an upstream side of each discharge flow channel 222 is closed. The discharge flow channels 222 are provided in a groove shape from the surface F20 of the flow channel plate 20 opposing the reactor 10.

The supply flow channels 221 and the discharge flow channels 222 are arranged side-by-side in a direction (left-right direction in the plane of the paper in FIG. 2) substantially perpendicular to a direction in which the reactant gas flows inside the supply flow channels 221 and the discharge flow channels 222. Further, a plurality of supply flow channels 221 and a plurality of discharge flow channels 222 are alternately arranged in the direction substantially perpendicular to the direction in which the reactant gas flows inside the supply flow channels 221 and the discharge flow channels 222. That is, the supply flow channels 221 and the discharge flow channels 222 have a structure of an interdigitated flow field.

The gas discharge port 23 is an outlet for the reactant gas to be discharged.

The reactant gas supplied through the gas supply port 21 flows through the supply flow channels 221 from the upstream side toward the downstream side. In this process, the reactant gas diffuses toward the reactor 10 immediately above the flow channels and simultaneously, a flow of the reactant gas toward the adjacent discharge flow channels 222 is created via the gas diffusion layer 40.

As shown on the right side of FIG. 2, the cross sectional area on the downstream side of the supply flow channel 221 is smaller than the cross sectional area on the upstream side of the supply flow channel 221. More specifically, the width on the downstream side of the supply flow channel 221 is smaller than the width on the upstream side of the supply flow channel 221. Note that the width of the supply flow channel 221 corresponds to a width in a direction (left-right direction in the plane of the paper in FIG. 2) substantially parallel to the surface F20 of the flow channel plate opposing the reactor 10.

Further, the depth on the downstream side of the supply flow channel 221 is substantially the same as the depth on the upstream side of the supply flow channel 221. Note that the depth of the supply flow channel 221 corresponds to a width in a direction (up-down direction in the plane of the paper in FIG. 2) substantially perpendicular to the surface F20 of the flow channel plate opposing the reactor 10.

Portion of the reactant gas is consumed through the electrochemical reaction or flows to the discharge flow channels 222. In this manner, the flow amount of the reactant gas is reduced from the upstream side toward the downstream side of the supply flow channels 221. In the first embodiment, as the flow amount reduces, the flow channel width of the supply flow channel 221 also reduces from the upstream side toward the downstream side. By appropriately designing the flow channel width, the flow rate of the reactant gas in the supply flow channels 221 can be made almost unchanged from the upstream side toward the downstream side. In this manner, the static pressure difference between the supply flow channels 221 and the discharge flow channels 222 is more stabilized across the entire flow channel region. As a result, the flow of the reactant gas toward the gas diffusion layer 40 is also similarly more stabilized and made to be uniform.

As described above, according to the first embodiment, the width on the downstream side of the supply flow channel 221 is smaller than the width on the upstream side of the supply flow channel 221. In this manner, the flow of the reactant gas from the supply flow channels 221 to the gas diffusion layer 40 can be made further uniform from the upstream side toward the downstream side. As a result, generated power distribution can be made further uniform.

Further, in the interdigitated flow field, by changing the flow channel cross sectional area from the upstream side toward the downstream side of the supply flow channel 221 and the discharge flow channel 222 so as to correspond to the substance balance through the electrochemical reaction, the change in the flow rate is suppressed and the static pressure difference between adjacent flow channels becomes substantially constant in any regions of the flow channel, so that the flow of the reactant gas toward the gas diffusion layer 40 becomes substantially constant across the entire flow channel region. In this manner, the flow of the reactant gas toward the gas diffusion layer 40 is more stabilized without increasing the flow channel resistance due to a non-uniform flow toward the gas diffusion layer 40, so that improvement in the durability of the constituent members due to improved reaction efficiency and uniform reaction is expected.

Furthermore, the flow channel volume of the supply flow channels 221 and the flow channel volume of the discharge flow channels 222 are substantially equivalent. In this manner, the flow of the reactant gas from the supply flow channels 221 toward the gas diffusion layer 40 can be made to be further uniform from the upstream side toward the downstream side without increasing the flow channel resistance (pressure loss). By suppressing the increase in the flow channel resistance per cell, it is possible to suppress a risk of generating a large pressure distribution within a reaction surface and a concern about losing the efficiency of the entire system due to an increase in auxiliary machine loss due to an increase in the supply pressure under the condition in which the flow amount of gas with a high density, such as air and carbon monoxide, increases. Note that the flow channel volumes are not necessarily the same. A slight difference in the flow channel volume between the supply flow channels 221 and the discharge flow channels 222 may be provided within a range with a small impact of the flow channel resistance.

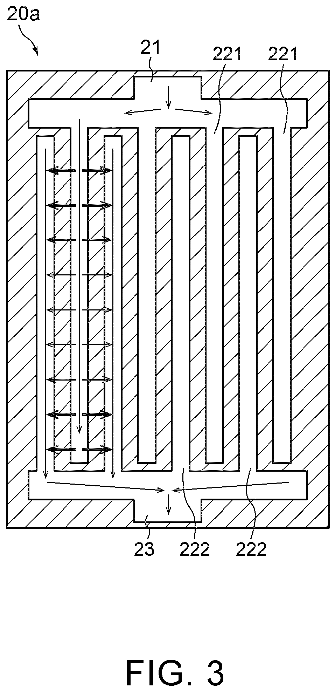

FIG. 3 is a cross sectional view showing an example of the configuration of a flow channel plate 20a according to a comparative example. The comparative example differs from the first embodiment in that the cross sectional area of the supply flow channel 221 is substantially the same from the upstream side toward the downstream side. Note that the cross sectional area of the discharge flow channel 222 is also substantially the same from the upstream side toward the downstream side. The arrows shown in FIG. 3 indicate the flow of the reactant gas. The thick arrow indicates that the flow rate is higher as compared to that indicated by the thin arrow.

In general, a pressure loss $\Delta P$ when a fluid passes through a porous body can be approximated using Formula 1 below.

$$\Delta P = K_v u + K_i u^2 \quad (\text{Formula 1})$$

where "u" represents the speed of a fluid, "$K_v$" represents a viscous resistance coefficient, and "$K_i$" represents an inertial resistance coefficient. There is a term proportional to a square of the flow rate "u", but in the case of the typical interdigitated flow field, as described above, since the flow toward the gas diffusion layer 40 is intensively created in the upstream region and the downstream region (see FIG. 3), the pressure loss could increase.

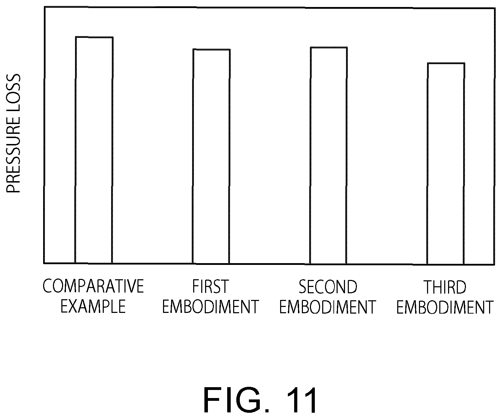

By contrast, in the first embodiment, as shown on the left side of FIG. 2, the flow (flow amount) toward the gas diffusion layer 40 is made uniform across the entire flow channel region. In this manner, the pressure loss due to the reactant gas intensively passing through the gas diffusion layer 40 particularly in the vicinity of the upstream region and the downstream region is reduced so that the pressure loss from the gas supply port 21 to the gas discharge port 23 of the flow channel plate 20 can be reduced. Note that the reduction in the pressure loss will be described later with reference to FIG. 11.

(First modification of first embodiment)

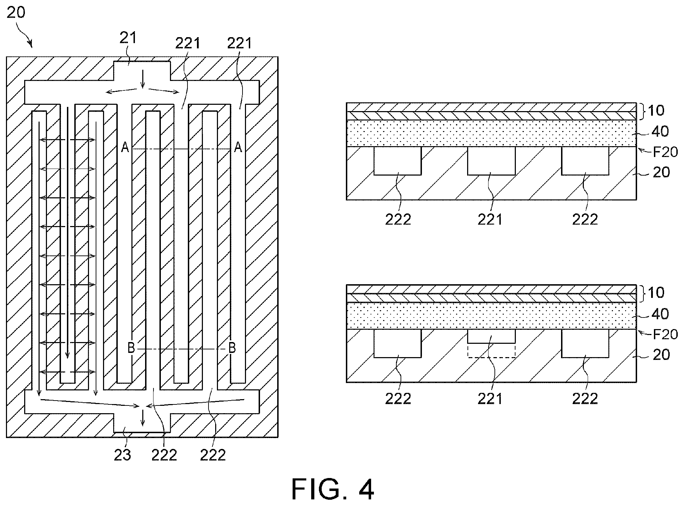

FIG. 4 is a cross sectional view showing an example of the configuration of the flow channel plate 20 according to a first modification of the first embodiment. The first modification of the first embodiment differs from the first embodiment in that the depth of the supply flow channel 221 changes from the upstream side toward the downstream side.

As shown on the right side of FIG. 4, the depth on the downstream side of the supply flow channel 221 is smaller than the depth on the upstream side of the supply flow channel 221.

Further, the width on the downstream side of the supply flow channel 221 is substantially the same as the width on the upstream side of the supply flow channel 221.

As in the first modification of the first embodiment, the depth of the supply flow channel 221 may change from the upstream side toward the downstream side. The flow channel plate 20 according to the first modification of the first embodiment can obtain the same advantageous effects as those of the first embodiment.

(Second modification of first embodiment)

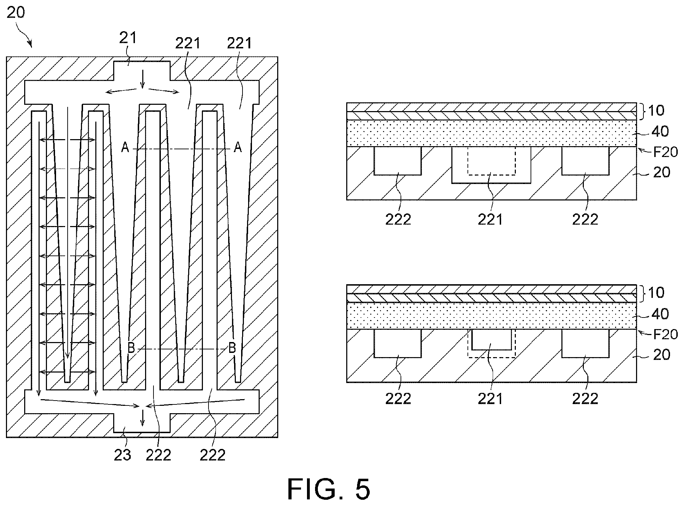

FIG. 5 is a cross sectional view showing an example of the configuration of the flow channel plate 20 according to a second modification of the first embodiment. The second modification of the first embodiment is a combination of the first embodiment and the first modification of the first embodiment.

As shown on the right side of FIG. 5, the width and the depth on the downstream side of the supply flow channel 221 are respectively smaller than the width and the depth on the upstream side of the supply flow channel 221.

As in the second modification of the first embodiment, the width and the depth of the supply flow channel 221 may both change from the upstream side toward the downstream side. The flow channel plate 20 according to the second modification of the first embodiment can obtain the same advantageous effects as those of the first embodiment.

(Second embodiment)

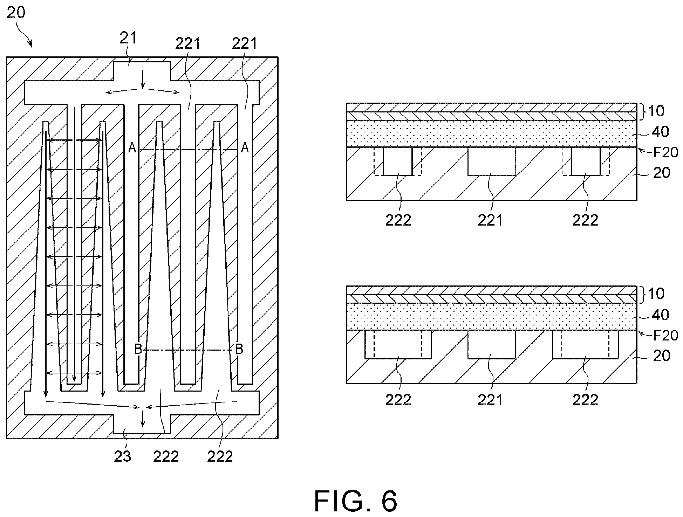

FIG. 6 is a cross sectional view showing an example of the configuration of the flow channel plate 20 according to a second embodiment. The second embodiment differs from the first embodiment in that the cross sectional area of the discharge flow channel 222 changes from the upstream side toward the downstream side.

As shown on the right side of FIG. 6, the cross sectional area on the downstream side of the discharge flow channel 222 is greater than the cross sectional area on the upstream side of the discharge flow channel 222.

More specifically, the width on the downstream side of the discharge flow channel 222 is greater than the width on the upstream side of the discharge flow channel 222.

Further, the depth on the downstream side of the discharge flow channel 222 is substantially the same as the depth on the upstream side of the discharge flow channel 222.

As with the supply flow channel 221, in the discharge flow channel 222, the reactant gas is consumed through the electrochemical reaction, while the reactant gas is supplied from the supply flow channel 221 via the gas diffusion layer 40. In this manner, the flow amount of the reactant gas increases from the upstream side toward the downstream side. In the second embodiment, as the flow amount increases, the flow channel width of the discharge flow channel 222 also increases from the upstream side toward the downstream side. By appropriately designing the flow channel width, the flow rate of the reactant gas in the discharge flow channel 222 can be made almost unchanged from the upstream side toward the downstream side. In this manner, the static pressure difference between the supply flow channel 221 and the discharge flow channel 222 is more stabilized across the entire flow channel region. As a result, the flow of the reactant gas from the gas diffusion layer 40 is also similarly more stabilized and made to be uniform.

As in the second embodiment, the cross sectional area of the discharge flow channel 222 may change from the upstream side toward the downstream side. The flow channel plate 20 according to the second embodiment can obtain the same advantageous effects as those of the first embodiment.

(First modification of second embodiment)

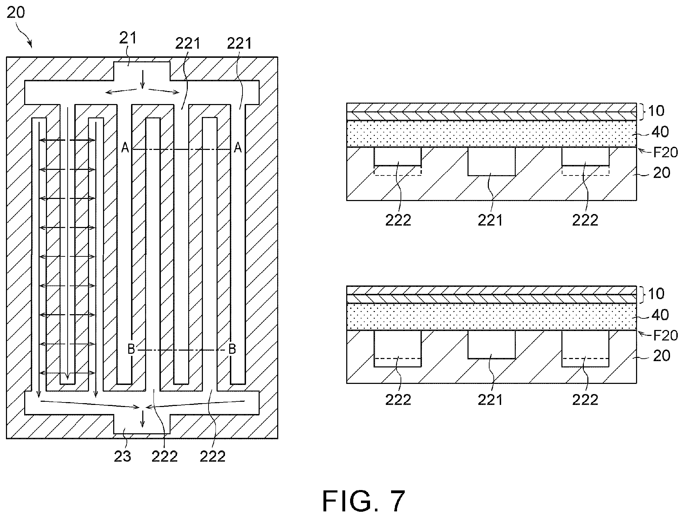

FIG. 7 is a cross sectional view showing an example of the configuration of the flow channel plate 20 according to a first modification of the second embodiment. The first modification of the second embodiment differs from the second embodiment in that the depth of the discharge flow channel 222 changes from the upstream side toward the downstream side.

As shown on the right side of FIG. 7, the depth on the downstream side of the discharge flow channel 222 is smaller than the depth on the upstream side of the discharge flow channel 222.

Further, the width on the downstream side of the discharge flow channel 222 is substantially the same as the width on the upstream side of the discharge flow channel 222.

As in the first modification of the second embodiment, the depth of the discharge flow channel 222 may change from the upstream side toward the downstream side. The flow channel plate 20 according to the first modification of the second embodiment can obtain the same advantageous effects as those of the second embodiment.

(Second modification of second embodiment)

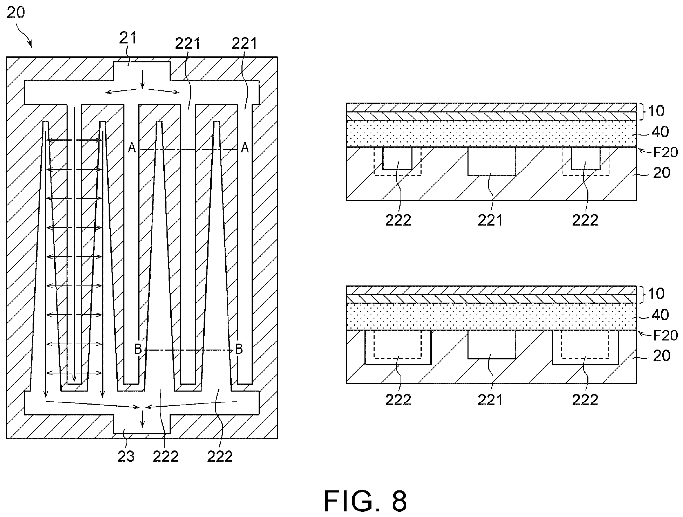

FIG. 8 is a cross sectional view showing an example of the configuration of the flow channel plate 20 according a second modification of the second embodiment. The second modification of the second embodiment is a combination of the second embodiment and the first modification of the second embodiment.

As shown on the right side of FIG. 8, the width and the depth on the downstream side of the discharge flow channel 222 are respectively smaller than the width and the depth on the upstream side of the discharge flow channel 222.

As in the second modification of the second embodiment, the width and the depth of the discharge flow channel 222 may both change from the upstream side toward the downstream side. The flow channel plate 20 according to the second modification of the second embodiment can obtain the same advantageous effects as those of the second embodiment.

(Third embodiment)

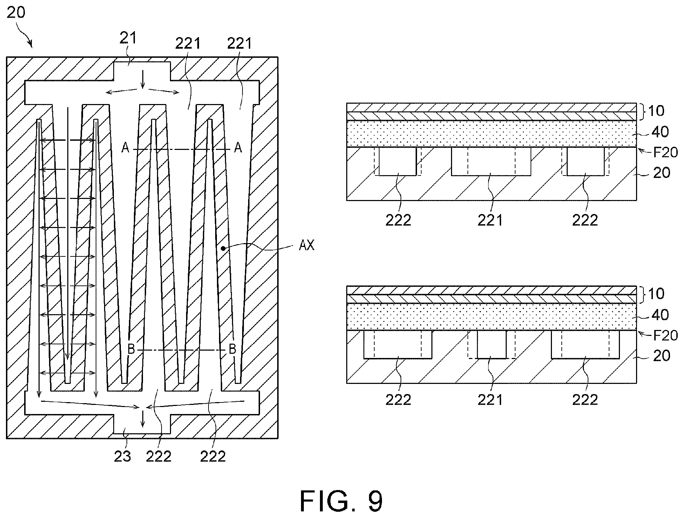

FIG. 9 is a cross sectional view showing an example of the configuration of the flow channel plate 20 according to a third embodiment. The third embodiment is a combination of the first embodiment and the second embodiment.

As shown on the right side of FIG. 9, the cross sectional area on the downstream side of the supply flow channel 221 is smaller than the cross sectional area on the upstream side of the supply flow channel 221. More specifically, the width on the downstream side of the supply flow channel 221 is smaller than the width on the upstream side of the supply flow channel 221.

Further, the cross sectional area on the downstream side of the discharge flow channel 222 is greater than the cross sectional area on the upstream side of the discharge flow channel 222. More specifically, the width on the downstream side of the discharge flow channel 222 is greater than the width on the upstream side of the discharge flow channel 222.

Furthermore, the depth on the downstream side of the supply flow channel 221 is substantially the same as the depth on the upstream side of the supply flow channel 221. The depth on the downstream side of the discharge flow channel 222 is substantially the same as the depth on the upstream side of the discharge flow channel 222.

Note that the cross sectional areas may be changed depending on the depths of the supply flow channel 221 and discharge flow channel 222, without being limited to the widths.

Further, as viewed from the surface F20, the supply flow channel 221 and the discharge flow channel 222 that are adjacent to each other may have a shape in a point symmetry about a center position (centroid) between the supply flow channel 221 and the discharge flow channel 222. Furthermore, the supply flow channel 221 and the discharge flow channel 222 that are adjacent to each other may have a shape in a symmetry about a center axis AX. The center axis AX is an axis in a direction substantially perpendicular to the surface F20, passing through the center position (centroid) between the supply flow channel 221 and the discharge flow channel 222 that are adjacent to each other, as viewed from a direction substantially perpendicular to the surface F20.

As in the third embodiment, the cross sectional areas of both the supply flow channel 221 and the discharge flow channel 222 may change from the upstream side toward the downstream side. The flow channel plate 20 according to the third embodiment can obtain the same advantageous effects as those of the first embodiment.

(Comparative example)

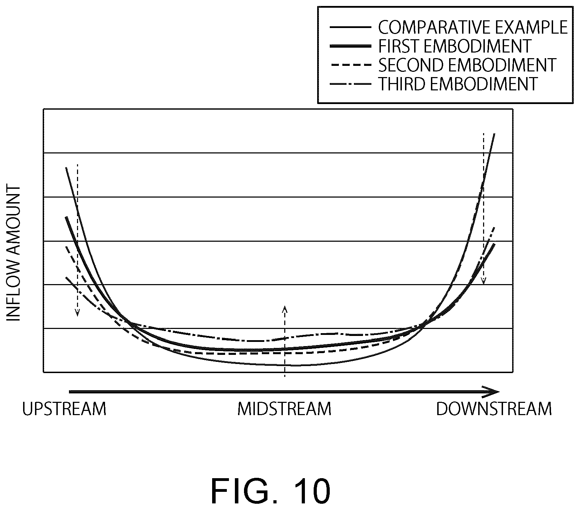

FIG. 10 is a graph showing an example of an inflow amount of a reactant gas according to the first embodiment to the third embodiment and a comparative example. FIG. 10 shows results of a model analysis (simulation). The longitudinal axis of the graph represents an inflow amount of a reactant gas from the supply flow channel 221 toward the discharge flow channel 222 (gas diffusion layer 40) as an adjacent flow channel. The lateral axis of the graph represents the position in the supply flow channel 221 from the upstream side to the downstream side.

As shown in FIG. 10, in the first embodiment and the second embodiment, as compared to the comparative example, the inflow amount in the upstream region and the downstream region reduces and the inflow amount in the midstream region increases. Likewise, in the third embodiment, as compared to the first embodiment and the second embodiment, the inflow amount in the upstream region and the downstream region reduces and the inflow amount in the midstream region increases. Therefore, in the first embodiment to the third embodiment, the inflow amount of the reactant gas can be made more uniform.

FIG. 11 is a bar chart showing an example of an overall pressure loss of the electrochemical cell 1 according to the first embodiment to the third embodiment and the comparative example. The longitudinal axis of the chart represents the pressure loss.

As shown in FIG. 11, in the first embodiment and the second embodiment, the pressure loss reduces as compared to the comparative example. Likewise, in the third embodiment, the pressure loss reduces as compared to the first embodiment and the second embodiment.

In the first embodiment to the third embodiment, the flow of the reactant gas toward the gas diffusion layer 40 is made uniform across the entire flow channel region. In this manner, the flow rate "u" of the reactant gas reduces in the vicinity of the upstream region and the downstream region. As a result, in accordance with Formula 1, the overall pressure loss can be reduced.

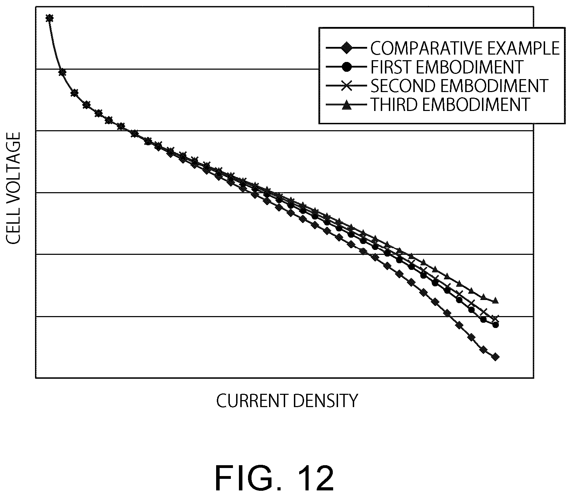

FIG. 12 is a graph showing an example of the performance of the electrochemical cell 1 as a fuel battery cell according to the first embodiment to the third embodiment and the comparative example. FIG. 12 shows results of a model analysis (simulation). The longitudinal axis of the graph represents a cell voltage. The lateral axis of the graph represents a current density.

As shown in FIG. 12, the first embodiment to the third embodiment exhibit higher cell voltage relative to the same current density as compared to the comparative example. In particular, as the current density increases to thus increase the impact of the diffusion overvoltage, the advantageous effects are remarkably exhibited. Further, in the case of the third embodiment in which the flow channel widths (cross sectional areas) of both the supply flow channel 221 and the discharge flow channel 222 are changed, the advantageous effects are most significantly exhibited.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A flow channel plate comprising a flow channel for a reactant gas supplied to an electrochemical reactor, wherein

   the flow channel includes:

   a supply flow channel connected to a gas supply port and having a closed flow channel end on a downstream side; and
   a discharge flow channel connected to a gas discharge port and having a closed flow channel end on an upstream side,

   the supply flow channel and the discharge flow channel are arranged side-by-side in a direction substantially perpendicular to a direction in which the reactant gas flows inside the supply flow channel and the discharge flow channel, and
   at least one of a cross sectional area on the downstream side of the supply flow channel being smaller than a cross sectional area on an upstream side of the supply flow channel or a cross sectional area on a downstream side of the discharge flow channel being greater than a cross sectional area on the upstream side of the discharge flow channel is satisfied.

2. The flow channel plate according to claim 1, wherein at least one of followings is satisfied: a width, a depth, or at least one of the width or the depth of the supply flow channel on the downstream side is smaller than the width, the depth, or the at least one of the width or the depth of the supply flow channel on the upstream side, the width and the depth of the supply flow channel being respectively in a direction substantially parallel to and in a direction substantially perpendicular to a first surface of the flow channel plate opposing the electrochemical reactor; or a width, a depth, or at least one of the width or the depth of the discharge flow channel on the downstream side is greater than the width, the depth, or the at least one of the width or the depth of the discharge flow channel on the upstream side, the width and the depth of the discharge flow channel being respectively in the direction substantially parallel to and in the direction substantially perpendicular to the first surface.

3. The flow channel plate according to claim 1, wherein a flow channel volume of the supply flow channel is substantially equivalent to a flow channel volume of the discharge flow channel.

4. The flow channel plate according to claim 1, wherein the supply flow channel and the discharge flow channel that are adjacent to each other have a shape in a point symmetry about a center position between the supply flow channel and the discharge flow channel as viewed from a first surface of the flow channel plate opposing the electrochemical reactor.

5. The flow channel plate according to claim 1, wherein the supply flow channel and the discharge flow channel that are adjacent to each other have a shape in a symmetry about a center axis passing through a center position between the supply flow channel and the discharge flow channel, the center axis being substantially perpendicular to a first surface of the flow channel plate opposing the electrochemical reactor.

6. The flow channel plate according to claim 1, wherein

the flow channel comprises:

the supply flow channel, the supply flow channel comprising a plurality of supply flow channels; and
the discharge flow channel, the discharge flow channel comprising a plurality of discharge flow channels,

the plurality of supply flow channels and the plurality of discharge flow channels being alternately arranged in the direction substantially perpendicular to the direction in which the reactant gas flows inside the supply flow channels and the discharge flow channels.

7. The flow channel plate according to claim 1, wherein the reactant gas supplied to the supply flow channel is able to pass through the electrochemical reactor or the discharge flow channel via a gas diffusion layer provided between the electrochemical reactor and a first surface of the flow channel plate opposing the electrochemical reactor.

8. The flow channel plate according to claim 1, wherein the supply flow channel and the discharge flow channel are provided in a groove shape from a first surface of the flow channel plate opposing the electrochemical reactor.

9. An electrochemical cell comprising the flow channel plate according to claim 1.

FIG. 1

FIG. 2

FIG. 3

FIG. 4

FIG. 5

FIG. 6

FIG. 7

FIG. 8

FIG. 9

COMPARATIVE EXAMPLE
FIRST EMBODIMENT
SECOND EMBODIMENT
THIRD EMBODIMENT

INFLOW AMOUNT

UPSTREAM          MIDSTREAM          DOWNSTREAM

FIG. 10

FIG. 11

FIG. 12

Europäisches
Patentamt

European
Patent Office

Office européen
des brevets

# EUROPEAN SEARCH REPORT

Application Number

EP 25 15 0894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 362 147 A2 (NUVERA FUEL CELLS LLC [US]) 1 May 2024 (2024-05-01) * paragraphs [0020], [0054] - [0062]; figures 1, 10-11 * | 1-9 | INV. H01M8/0258 H01M8/026 H01M8/0265 H01M8/0267 H01M8/04089 |
| X | WO 2020/056580 A1 (SHANGHAI SUNBRIDGE POWER TECH CO LTD [CN]) 26 March 2020 (2020-03-26) * Fig. 7+8, 11+12, 13A, 13B and corresponding text in the description; claim 1 * | 1-9 | |
| X | JP 2007 005237 A (HONDA MOTOR CO LTD) 11 January 2007 (2007-01-11) * paragraphs [0022] - [0023], [0064] - [0067]; claims 1-4; figures 2, 13 * | 1-9 | |

TECHNICAL FIELDS
SEARCHED     (IPC)

H01M

The present search report has been drawn up for all claims

| Place of search | Date of completion of the search | Examiner |
|---|---|---|
| Munich | 14 May 2025 | Schmidtbauer, H |

EPO FORM 1503 03.82 (P04C01)

## ANNEX TO THE EUROPEAN SEARCH REPORT
## ON EUROPEAN PATENT APPLICATION NO.

EP 25 15 0894

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2025

| Patent document cited in search report | | Publication date | Patent family member(s) | | Publication date |
|---|---|---|---|---|---|
| EP 4362147 | A2 | 01-05-2024 | AU | 2019209552 A1 | 06-08-2020 |
| | | | AU | 2025201367 A1 | 20-03-2025 |
| | | | CN | 111868982 A | 30-10-2020 |
| | | | EP | 3740991 A1 | 25-11-2020 |
| | | | EP | 4362147 A2 | 01-05-2024 |
| | | | ES | 2969963 T3 | 23-05-2024 |
| | | | JP | 7449228 B2 | 13-03-2024 |
| | | | JP | 2021511634 A | 06-05-2021 |
| | | | KR | 20200106953 A | 15-09-2020 |
| | | | KR | 20240125689 A | 19-08-2024 |
| | | | US | 2019221867 A1 | 18-07-2019 |
| | | | WO | 2019143799 A1 | 25-07-2019 |
| WO 2020056580 | A1 | 26-03-2020 | CN | 112771700 A | 07-05-2021 |
| | | | WO | 2020056580 A1 | 26-03-2020 |
| JP 2007005237 | A | 11-01-2007 | NONE | | |

EPO FORM P0459

For more details about this annex : see Official Journal of the European Patent Office, No. 12/82